# EUROPEAN PATENT APPLICATION

(11) **EP 4 715 600 A1**
(43) Date of publication of application: **25.03.2026**
(21) Application number: 24829864.8
(22) Date of filing: 23.02.2024
(51) Int. Cl.: G06F 11/36

(54) **WORKFLOW DEBUGGING METHOD AND SYSTEM**

(30) Priority: 28.06.2023 CN 202310776859; 15.08.2023 CN 202311027172
(71) Applicant: Huawei Cloud Computing Technologies Co., Ltd., Guiyang, Guizhou, 550025 (CN)
(72) Inventor: CHENG, Linwei, Guiyang, Guizhou 550025 (CN); MIAO, Qiang, Guiyang, Guizhou 550025 (CN); LUO, Jinrong, Guiyang, Guizhou 550025 (CN)
(74) Representative: Pfenning, Meinig & Partner mbB
(86) International application number: PCT/CN2024/078369
(87) International publication number: WO 2025/001207

(57) **Abstract**

This application provides a workflow debugging method and system. The method is applied to a cloud platform. The cloud platform is configured to provide a workflow design service. The method includes: obtaining, from a design interface of a workflow, a debugging requirement related to a first workflow, where the debugging requirement indicates a to-be-debugged flow fragment in the first workflow; sending related information about the flow fragment to a sandbox runtime environment; and debugging the flow fragment in the sandbox runtime environment. This solution facilitates flexible debugging on a workflow, thereby improving debugging efficiency and user experience.

## Description

This application claims priorities to Chinese Patent Application No. 202310776859.0, filed with the China National Intellectual Property Administration on June 28, 2023 and entitled "SERVICE FLOW DEBUGGING METHOD AND APPARATUS", and to Chinese Patent Application No. 202311027172.3, filed with the China National Intellectual Property Administration on August 15, 2023 and entitled "WORKFLOW DEBUGGING METHOD AND SYSTEM", both of which are incorporated herein by reference in their entireties.

### TECHNICAL FIELD

This application relates to the field of debugging technologies, and more specifically, to a workflow debugging method and system.

### BACKGROUND

A workflow (workflow) is an abstract and generalized description of working procedures and service rules between various operation steps thereof. The workflow is essentially a pipeline tool developed by users based on actual service scenarios for deploying models or applications. With the continuous expansion of service scenarios, the workflow created by users is increasingly complex, heightening the demand for workflow debugging (debug).

Currently, debuggers for workflows face numerous constraints, making it challenging to fulfill users' debugging requirements. For example, in a workflow design phase, users cannot deploy workflows to running environments for debugging because of incomplete workflow design or temporary connection failures of some nodes dependent on external environments. This significantly hampers the efficiency of workflow development.

Therefore, how to improve debugging efficiency becomes an urgent problem to be resolved.

### SUMMARY

This application provides a workflow debugging method and system, to facilitate flexible debugging on a workflow, thereby improving debugging efficiency and user experience.

According to a first aspect, a workflow debugging method is provided, the method is applied to a cloud platform, the cloud platform is configured to provide a workflow design service, and the method includes: obtaining, from a design interface of a workflow, a debugging requirement related to a first workflow, where the debugging requirement indicates a to-be-debugged flow fragment in the first workflow, the flow fragment includes one node or a plurality of nodes in the first workflow, when the flow fragment includes the plurality of nodes, the flow fragment further includes a connection relationship among the plurality of nodes, and the connection relationship among the plurality of nodes indicates an execution sequence of the plurality of nodes; sending related information about the flow fragment to a sandbox (sandbox) runtime environment, where the related information about the flow fragment indicates the flow fragment and a start input of the flow fragment; receiving an input debugging instruction; debugging the flow fragment in the sandbox runtime environment according to the debugging instruction; and outputting debugging information, where the debugging information indicates an update of a running status in a debugging process.

In the solution in this embodiment of this application, a flow fragment debug service is provided for users, and a flow fragment selected by the user is delivered to the sandbox runtime environment, so that the user can debug a fragment in a workflow. This improves debugging flexibility, thereby improving user experience and debugging efficiency.

In addition, the solution in this embodiment of this application can support remote online debugging. This facilitates fully usage of resources on a server side, and further improves debugging efficiency.

For example, the related information about the flow fragment may include the flow fragment itself.

With reference to the first aspect, in some implementations of the first aspect, the method further includes: converting the flow fragment into a second workflow, where the related information about the flow fragment indicates the second workflow and the start input of the flow fragment.

For example, converting the flow fragment into the second workflow may include: adding an end node after a part of or all branches of the flow fragment.

In the solution in this embodiment of this application, the flow fragment may be converted into a regular workflow. In this way, in a subsequent debugging process, the flow fragment may be debugged as a regular workflow, so that an existing debugging manner for the workflow may be reused. This helps reduce costs and expand application scenarios of the solution.

With reference to the first aspect, in some implementations of the first aspect, the start input of the flow fragment is start mock data, and the method further includes: adding a start mock node before a start node of the flow fragment; and setting the start mock data on the start mock node to obtain a processed flow fragment, where the related information about the flow fragment indicates the processed flow fragment.

There may be one or more start nodes of the flow fragment. For example, the start mock node is added before each start node of the flow fragment.

The start mock data is input data of the start node of the flow fragment.

For example, the start mock data may be generated by a system.

If the flow fragment is converted into a workflow in a processing manner, this helps ensure validity of the workflow obtained through conversion.

With reference to the first aspect, in some implementations of the first aspect, the method further includes: obtaining the start mock data from the design interface of the workflow.

The start mock data may be input by the user.

With reference to the first aspect, in some implementations of the first aspect, the method further includes: performing semantic validity verification on the flow fragment, and when the verification succeeds, sending the related information about the flow fragment to the sandbox runtime environment.

With reference to the first aspect, in some implementations of the first aspect, the method further includes: obtaining setting information of a breakpoint, where the breakpoint is in the flow fragment, and the related information about the flow fragment indicates the setting information of the breakpoint.

With reference to the first aspect, in some implementations of the first aspect, the method further includes: obtaining related information about mock stubbing, where the related information about the flow fragment indicates the related information about mock stubbing.

For example, the related information about mock stubbing may include a location of mock stubbing.

In this embodiment of this application, a debugging function of a mock stubbing operation is provided, to further improve debugging flexibility and user experience.

With reference to the first aspect, in some implementations of the first aspect, the debugging the flow fragment in the sandbox runtime environment according to the debugging instruction includes: creating a runtime instance (instance) in the sandbox runtime environment, where the runtime instance corresponds to the flow fragment; and performing an operation on the runtime instance based on the input debugging instruction, where the debugging information indicates an update of a running status of the runtime instance.

With reference to the first aspect, in some implementations of the first aspect, the method further includes: removing the flow fragment from the sandbox runtime environment after the debugging ends.

According to a second aspect, a workflow debugging system is provided, including: a console module, configured to obtain, from a design interface of a workflow, a debugging requirement related to a first workflow, where the debugging requirement indicates a to-be-debugged flow fragment in the first workflow, the flow fragment includes one node or a plurality of nodes in the first workflow, when the flow fragment includes the plurality of nodes, the flow fragment further includes a connection relationship among the plurality of nodes, and the connection relationship among the plurality of nodes indicates an execution sequence of the plurality of nodes; a management module, configured to send related information about the flow fragment to a sandbox runtime environment, where the related information about the flow fragment indicates the flow fragment and a start input of the flow fragment, where the console module is further configured to receive an input debugging instruction; and a debugging module, configured to debug the flow fragment in the sandbox runtime environment according to the debugging instruction, where the console module is further configured to output debugging information, where the debugging information indicates an update of a running status in a debugging process.

With reference to the second aspect, in some implementations of the second aspect, the management module is further configured to: convert the flow fragment into a second workflow, where the related information about the flow fragment indicates the second workflow and the start input of the flow fragment.

With reference to the second aspect, in some implementations of the second aspect, the start input of the flow fragment is start mock data, and the management module is further configured to: add a start mock node before a start node of the flow fragment; and set the start mock data on the start mock node to obtain a processed flow fragment, where the related information about the flow fragment indicates the processed flow fragment.

With reference to the second aspect, in some implementations of the second aspect, the console module is further configured to: obtain the start mock data from the design interface of the workflow.

With reference to the second aspect, in some implementations of the second aspect, the management module is further configured to: perform semantic validity verification on the flow fragment, and when the verification succeeds, send the related information about the flow fragment to the sandbox runtime environment.

With reference to the second aspect, in some implementations of the second aspect, the debugging module is specifically configured to: create a runtime instance in the sandbox runtime environment, where the runtime instance corresponds to the flow fragment; and perform an operation on the runtime instance based on the input debugging instruction, where the debugging information indicates an update of a running status of the runtime instance.

With reference to the second aspect, in some implementations of the second aspect, the debugging module is further configured to: remove the flow fragment from the sandbox runtime environment after the debugging ends.

It should be understood that extensions, definitions, explanations, and descriptions of related content in the first aspect are also applicable to same content in the second aspect.

According to a third aspect, a computing device cluster is provided, including at least one computing device, where each computing device includes a processor and a memory. The processor of the at least one computing device is configured to execute instructions stored in the memory of the at least one computing device, to cause the computing device cluster to perform the method in any one of the first aspect and the implementations of the first aspect.

According to a fourth aspect, a computer-readable medium is provided, including computer program instructions. When the computer program instructions are executed by a computing device cluster, the computing device cluster performs the method in any one of the first aspect and the implementations of the first aspect.

According to a fifth aspect, a computer program product including instructions is provided. When the instructions are run by a computing device cluster, the computing device cluster is caused to perform the method in any one of the first aspect and the implementations of the first aspect.

### BRIEF DESCRIPTION OF DRAWINGS

FIG. 1 is a diagram of a workflow;
FIG. 2 is a schematic flowchart of a workflow debugging method according to an embodiment of this application;
FIG. 3 is a diagram of an interaction operation according to an embodiment of this application;
FIG. 4 is a diagram of adding a start mock node according to an embodiment of this application;
FIG. 5 is a diagram of a second workflow according to an embodiment of this application;
FIG. 6 is a diagram of another workflow debugging method according to an embodiment of this application;
FIG. 7 is a block diagram of a workflow debugging system according to an embodiment of this application;
FIG. 8 is a block diagram of a computing device according to an embodiment of this application;
FIG. 9 is a block diagram of a computing device cluster according to an embodiment of this application; and
FIG. 10 is a block diagram of another computing device cluster according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In embodiments of this application, "relevant (corresponding, relevant)" and "corresponding (corresponding)" may sometimes be mixed. It should be noted that meanings to be expressed by the two are consistent when a difference between them is not emphasized.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A workflow (workflow), also referred to as a service flow, is an abstract and generalized description of working procedures and service rules between various operation steps thereof.

The workflow is essentially a pipeline tool developed by developers based on actual service scenarios for deploying models or applications. In a workflow, each service logic may be referred to as a task, a job, an activity, a service, or the like. The workflow may be represented as a graph structure, for example, a directed acyclic graph (directed acyclic graph, DAG). A DAG illustrates descriptions of nodes and a relationship among the nodes. Each service logic may function as a node. Connection lines between the nodes are a description of the relationship among the nodes, and indicates an execution sequence of tasks.

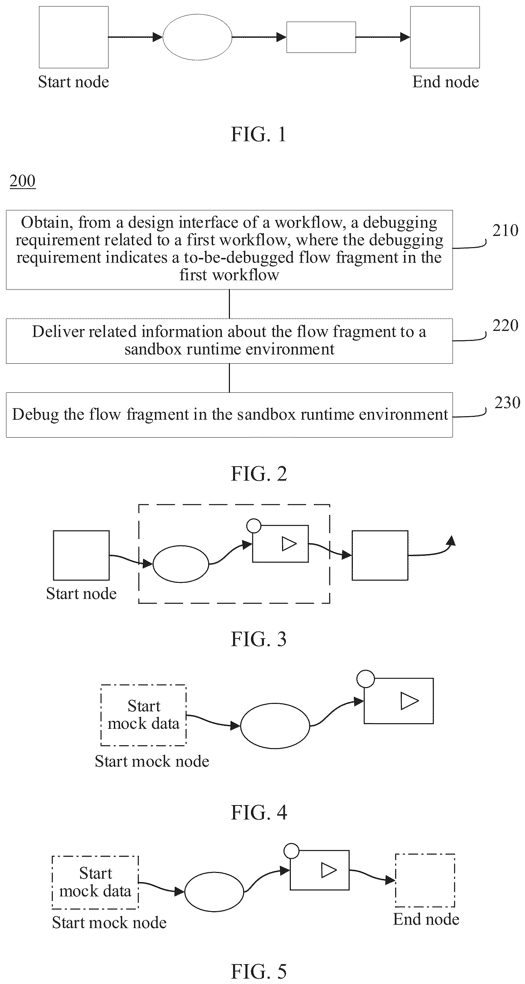

FIG. 1 is a diagram of a workflow. A 1^{st} node in the workflow is a start node. A direction indicated by arrows indicates an execution sequence. A last node indicated by the arrow in FIG. 1 is an end node of the workflow, and an identifier type of the node is "end node". It should be understood that a quantity of nodes, connection lines between nodes, and the like in FIG. 1 are all examples, and constitute no limitation on the solutions in embodiments of this application. For example, only one end node is shown in the workflow shown in FIG. 1. In another possible scenario, a workflow may include a plurality of end nodes.

Generally, a workflow may have two states: design (design time) and runtime (runtime time). When designing a workflow, user needs to describe nodes and relationships among the nodes, in other words, define execution content and an execution sequence of the nodes. Design operations on the workflow may be collectively referred to as design of the workflow. After determining the entire workflow, the user may solidify the workflow for subsequent scheduling and execution. States of scheduling and executing the workflow may be collectively referred to as runtime of the workflow. The workflow provides a visualized running mode.

Currently, debuggers (debugger) for workflows face numerous constraints, making it challenging to fulfill users' debugging requirements.

In view of this, embodiments of this application provide a workflow debugging method, to debug a workflow fragment (workflow fragment) in a workflow, so as to facilitate flexible debugging on the workflow and improve debugging efficiency. In a process in which users design workflows, solutions in embodiments of this application help users in time discover errors, defects, or the like in the workflow design, thereby improving design efficiency and accuracy of the workflows.

In the solutions in embodiments of this application, the workflow fragment may also be referred to as a flow fragment for short.

The solutions in embodiments of this application may be applied to a plurality of workflow debugging scenarios.

For example, in a possible debugging scenario, a design of a service flow is still incomplete. In the solutions in embodiments of this application, some or all completed design content may be used as a to-be-debugged flow fragment, and the flow fragment is debugged. This facilitates flexible debugging on the workflow and improves debugging efficiency. In this way, users can discover errors, defects, or the like in a currently completed design in time, so that users can adjust or modify the design as soon as possible.

For example, in a possible debugging scenario, some nodes need external dependencies, for example, need to be connected to some connectors and data sources. However, currently, the external dependencies temporarily cannot be introduced or inconvenient to be introduced. In the solutions in embodiments of this application, design content that does not need external dependencies may be used as a flow fragment, and the flow fragment is debugged. Alternatively, in the solutions in embodiments of this application, design content including a node that needs external dependencies may be used as a flow fragment, and the node that needs external dependencies is processed, and then the flow fragment is debugged. This facilitates flexible debugging on the workflow and improves debugging efficiency. In this way, users can discover errors, defects, or the like in a currently completed design in time, so that the user can adjust or modify the design as soon as possible.

For example, in a possible debugging scenario, because a service flow is complex, debugging the entire service flow is time-consuming. In the solutions in embodiments of this application, some design content may be used as a flow fragment, and the flow fragment is debugged. This facilitates flexible debugging on the workflow and improves debugging efficiency.

For example, in a possible debugging scenario, the user modifies some content in the service flow. In the solutions in embodiments of this application, the modified design content may be used as a flow fragment, and the flow fragment is debugged. This facilitates flexible debugging on the workflow and improves debugging efficiency.

It should be understood that the foregoing descriptions are merely an example, and the solutions in embodiments of this application may be further applied to another debugging scenario. This is not limited in embodiments of this application.

The solutions in embodiments of this application may be applied to local debugging scenarios, or may be applied to remote debugging scenarios.

FIG. 2 shows a workflow debugging method according to an embodiment of this application. The method 200 may be performed by a workflow debugging system. The system may be deployed in a local environment of a user. In other words, the method 200 may be applied to local debugging scenarios. Alternatively, the system may be used in a cloud platform, and the cloud platform may be configured to provide a workflow design service. The cloud platform includes a client and a server side. In other words, the method 200 may be applied to remote debugging scenarios.

As shown in FIG. 2, the method 200 includes the following steps.

210: Obtain, from a design interface of a workflow, a debugging requirement related to a first workflow. The debugging requirement indicates a to-be-debugged flow fragment in the first workflow.

The debugging requirement related to the first workflow may also be used as indication information of the to-be-debugged flow fragment in the first workflow. The flow fragment includes one node or a plurality of nodes in the first workflow. When the flow fragment includes the plurality of nodes, the flow fragment further includes a connection relationship among the plurality of nodes. Alternatively, the flow fragment further includes edges between the plurality of nodes.

The flow fragment may be any fragment in the first workflow.

The first workflow may also be referred to as an original workflow, that is, a workflow designed by a user.

"First" in the first workflow merely indicates that the workflow is a workflow designed by the user, and does not have any limitation function.

The first workflow is a workflow in design. The first workflow may be an incomplete workflow, for example, as shown in FIG. 3. Alternatively, the first workflow may be a complete workflow, for example, as shown in FIG. 1.

For example, the debugging requirement may be obtained through an input operation of the user. For example, step 210 may include: receiving a first input operation of the user. The to-be-debugged flow fragment may be determined based on the first input operation.

The following describes an example process of obtaining the debugging requirement.

The user may design the workflow on an interaction interface. The interaction interface may be used to obtain the input operation of the user.

The interaction interface may also be referred to as a user interface, that is, the design interface of the workflow, which is a visualized graphical interface. The workflow may be represented as a graph structure. To be specific, on the user interface, the first workflow may be represented by one node or a plurality of nodes and an edge between the nodes. An edge between two nodes, that is, a connection relationship between the two nodes, indicates an execution sequence of the two nodes.

For example, step 210 may include: receiving the first input operation performed by the user on the interaction interface, where the first workflow is displayed on the interaction interface. The first input operation may be used to determine the flow fragment.

The user may perform an operation on the interaction interface to select the to-be-debugged flow fragment, and the flow fragment may be determined based on the input operation of the user.

During actual application, one or more operation manners may be set, for the user to select a flow fragment from the first workflow.

For example, the first input operation of the user may include a click/tap operation of the user on at least one node in the first workflow. The clicked/tapped node is a node in the flow fragment. In other words, the user may select the flow fragment by performing a click/tap-selection operation on the interaction interface.

For another example, the first input operation of the user may include a box-selection operation performed by the user on a first region. A fragment that is in the first region and that is in the first workflow is the flow fragment. The user may select the flow fragment by performing the box-selection operation on the interaction interface. FIG. 3 is a diagram of a box-selection operation. A fragment in the dashed box shown in FIG. 3 is a flow fragment.

For another example, the first input operation of the user may be implemented by using a mouse, to be specific, the user selects the flow fragment through click selection or box selection by using the mouse. Alternatively, the first input operation of the user may alternatively be implemented by using a touchscreen, to be specific, the user may select the flow fragment through tap selection or box selection by using a touch operation on the touchscreen.

It should be understood that the foregoing descriptions are merely an example, and a specific implementation of the first input operation is not limited in this embodiment of this application.

If the method 200 is applied to the remote debugging scenario, step 210 may be performed by the client. For example, the client controls displaying of the first workflow on the interaction interface, and receives the first input operation of the user.

For example, the client may be a client browser. In other words, the user interface may be displayed on a web page of the browser.

For another example, the client may be client software, in other words, a client application (application, APP). In other words, the user interface may be displayed on a page of the client software.

For example, if the method 200 is applied to the remote debugging scenario, the client may obtain a debugging requirement of the user based on interaction with the user, and initiate a debugging request to a server. The debugging request indicates the flow fragment.

220: Deliver related information about the flow fragment to a sandbox runtime environment.

For example, if the method 200 is applied to remote debugging scenarios, step 230 may be performed by the server side. After receiving the debugging request, the server side may deliver the related information about the flow fragment to the sandbox runtime environment.

In a possible implementation, the related information about the flow fragment may include the flow fragment.

In another possible implementation, step 220 may include: processing the flow fragment; and sending a processed flow fragment to the sandbox runtime environment.

In this case, the related information about the flow fragment may include the processed flow fragment.

Further, the related information about the flow fragment may further indicate a start input of the flow fragment.

For a specific processing manner, refer to the following descriptions. Details are not described herein.

230: Debug the flow fragment in the sandbox runtime environment.

If the flow fragment is processed in step 220, step 230 may also be understood as debugging the processed flow fragment.

For example, if the method 200 is applied to the remote debugging scenario, step 230 may be performed by the server side. The server side starts debugging on the flow fragment in the sandbox runtime environment.

In step 230, interactive debugging may be performed on the flow fragment in the sandbox runtime environment.

Optionally, step 230 may include: receiving an input debugging instruction; debugging the flow fragment in the sandbox runtime environment according to the debugging instruction; and outputting debugging information, where the debugging information indicates an update of a running status in a debugging process.

In the solution in this embodiment of this application, a flow fragment debug service is provided for the user, and the flow fragment selected by the user is delivered to the sandbox runtime environment, so that the user can debug a fragment in a workflow. This improves debugging flexibility, thereby improving user experience and debugging efficiency. For example, in the solution in this embodiment of this application, the user may flexibly select a flow fragment for debugging, to avoid a case in which a workflow cannot be debugged due to a reason such as an incomplete service flow design or unavailability of some external dependencies, thereby improving user experience. For another example, in the solution in this embodiment of this application, the user may flexibly select a flow fragment for debugging. This helps the user quickly locate and correct errors, defects, or the like in a workflow design process, and helps the user quickly and accurately design a workflow.

In addition, the solution in this embodiment of this application can support remote online debugging. This facilitates fully usage of resources on the server side, and further improves debugging efficiency.

For example, in the debugging process, the start input of the flow fragment may be mock (mock) data.

Optionally, the method 200 may further include step 211 (not shown in the figure).

211: Obtain start mock data.

For example, the start mock data may be input by the user.

Optionally, step 211 may include: obtaining the start mock data from the design interface of the workflow.

If the method 200 is applied to the remote debugging scenario, step 211 may be performed by the client. In other words, the client obtains the start mock data input by the users. In this case, the debugging request initiated by the client to the server side may further indicate the start mock data. Correspondingly, the related information about the flow fragment that is delivered to the sandbox runtime environment may indicate the start mock data.

Alternatively, the start mock data may be generated by the system. For example, the system may generate the start mock data based on a default value or historical user data. Alternatively, the system may intelligently generate the start mock data based on a scenario. A method for generating the start mock data is not limited in this embodiment of this application.

For example, if the method 200 is applied to remote debugging scenarios, step 211 may be performed by the server side. In other words, the server side generates the start mock data. The related information about the flow fragment that is delivered to the sandbox runtime environment may indicate a flow fragment of the start mock data. Alternatively, step 211 may be performed by the client. In other words, the client generates the start mock data. In this case, the debugging request initiated by the client to the server side may indicate the start mock data. Correspondingly, the related information about the flow fragment that is delivered to the sandbox runtime environment may indicate the start mock data.

It should be understood that the foregoing descriptions are merely an example, and the start mock data may alternatively be obtained in another manner. This is not limited in this embodiment of this application.

The following uses Example 1 to Example 3 as examples to describe a processing process of the flow fragment.

### Example 1

Optionally, processing the flow fragment may include: performing semantic validity verification on the flow fragment.

For example, when the semantic validity verification succeeds, the processed flow fragment may be delivered to the sandbox runtime environment. If no other processing is performed on the flow fragment, when the semantic validity verification succeeds, the flow fragment may be delivered to the sandbox runtime environment. When the semantic validity verification fails, the debugging process may be terminated, and the related information about the flow fragment is not delivered to the sandbox runtime environment. Further, prompt information may be output to prompt the user that the flow fragment cannot be debugged.

### Example 2

Optionally, processing the flow fragment may include: adding a start mock node before a start node of the flow fragment; and setting the start mock data on the start mock node to obtain the processed flow fragment. In this case, the related information about the flow fragment may indicate the processed flow fragment, that is, indicate the flow fragment for which the start mock node is added and the start mock data is set, to indicate the flow fragment and the start mock data.

The start node of the flow fragment is a 1^{st} node to be executed in the flow fragment. The start mock data is input data of the start node of the flow fragment.

If the flow fragment includes a plurality of start nodes, start mock nodes may be respectively added before the plurality of start nodes, and start mock data corresponding to each start node is set on a corresponding start mock node. Start mock data corresponding to a start node is input data of the start node. A start mock node corresponding to a start node is a start mock node added before the start node. For ease of description, in this embodiment of this application, an example in which the flow fragment includes one start node is mainly used for description, and does not constitute a limitation on the solution in this embodiment of this application.

To ensure validity of a workflow, a start input of the workflow needs to be set on a start node of the workflow.

FIG. 4 is a diagram of adding a start mock node. For example, as shown in FIG. 4, the flow fragment originally includes a start node, and a mock node (that is, a start mock node) is added before the flow fragment as a start node. In other words, the start mock node becomes the new start node, and start mock data is set on the start node.

If the flow fragment is subsequently converted into a workflow, this helps ensure validity of the workflow obtained through conversion.

It should be understood that the foregoing step is an optional step. For example, if the original start node of the flow fragment is an actual start node of the first workflow, the start mock node may not need to be added, and the start mock data is set on the start node. If a part of a plurality of original start nodes included in the flow fragment is an actual start node of the first workflow, the start mock node does not need to be added before the part of start nodes, and start mock data corresponding to the part of start nodes is respectively set on the part of start nodes. Start mock nodes are respectively added before remaining start nodes of the flow fragment, and start mock data corresponding to the remaining start nodes is respectively set on the corresponding start mock nodes.

### Example 3

Optionally, processing the flow fragment may include: converting the flow fragment into a second workflow. Correspondingly, the related information about the flow fragment may indicate the second workflow and the start input of the flow fragment.

In this case, the related information about the flow fragment that is delivered to the sandbox runtime environment may include the second workflow.

"Second" in the "second workflow" is merely used to indicate that the workflow is obtained through conversion of the flow fragment, and does not have another limitation function.

The second workflow may be a complete workflow. Based on the validity of the workflow, a last node of each branch of the workflow needs to be an end node. A last node of a branch is a last node to be executed in the branch. The end node may also be understood as a node identified as "end".

For example, converting the flow fragment into the second workflow may include: adding an end node after a part of or all branches of the flow fragment.

This helps ensure validity of the second workflow obtained through conversion.

For example, if a last node of a part of branches in the flow fragment is an actual end node of the first workflow, an end node does not need to be added for the part of branches, and an end node may be added for only a remaining branch. If none of last nodes of all the branches in the flow fragment is an actual end node of the first workflow, end nodes may be respectively added after all the branches.

It should be understood that the foregoing step is an optional step. For example, if the last nodes of all the branches in the flow fragment are actual end nodes of the first workflow, no end node needs to be added.

Further, processing the flow fragment may further include: performing workflow validity verification on the second workflow.

Content that passes the workflow validity verification is considered as a workflow that is successfully converted into. In other words, when the workflow validity verification succeeds, the second workflow is a workflow that is successfully converted into. When the workflow validity verification fails, the second workflow is a workflow into which conversion fails. The related information about the flow fragment that is delivered to the sandbox runtime environment may include the second workflow that is successfully converted into. Further, if the workflow validity verification fails, prompt information may be output to prompt the user that the flow fragment cannot be debugged.

Example 2 and Example 3 may be used in combination. In this case, a start input of the second workflow is start mock data. FIG. 5 is a diagram of a second workflow. As shown in FIG. 5, in Example 3, the processed flow fragment in Example 2 may be converted into the second workflow, a start node of the second workflow is a start mock node, and start mock data is set on the start mock node. Correspondingly, the related information about the flow fragment may indicate the second workflow for which the start mock data is set.

In the solution in this embodiment of this application, the flow fragment may be converted into a regular workflow. In this way, in a subsequent debugging process, the flow fragment may be debugged as a regular workflow, so that an existing debugging manner for the workflow may be reused. This helps reduce costs and expand application scenarios of the solution.

It should be understood that the foregoing descriptions are merely an example. In another implementation, a dedicated debugger may be designed for the flow fragment. In this case, the original flow fragment may be directly delivered to the sandbox runtime environment.

Example 1 to Example 3 may be used in combination. For example, the solution in Example 1 is first performed, when the semantic validity verification succeeds, the solutions in Example 2 and Example 3 are then performed, and then the processed flow fragment is delivered. For another example, the solutions in Example 2 and Example 3 are first performed, then the solution in Example 1 is performed, and when the semantic validity verification succeeds, the processed flow fragment is delivered. The foregoing descriptions are merely an example, and a processing sequence of Example 1 to Example 3 is not limited in this embodiment of this application.

Outputs of the last nodes of all the branches of the flow fragment may be returned to the user as an output result of the second workflow. For example, the result of the second workflow may be returned to the user interface and displayed on the user interface.

Further, the method 200 may further include: obtaining setting information of a breakpoint; and sending the setting information of the breakpoint to the sandbox runtime environment. The breakpoint is in the flow fragment.

For example, the setting information of the breakpoint may include a location of the breakpoint and the like.

There may be one or more breakpoints. This is not limited in this embodiment of this application.

The breakpoint may be set on any node in the flow fragment.

Optionally, the interaction interface in step 210 may be further used to obtain the setting information of the breakpoint.

For example, the interaction interface may be used to receive a second input operation of the user. The second input operation is used to determine the setting information of the breakpoint.

The user may perform an operation on the interaction interface to select a node for which a breakpoint needs to be set to add the breakpoint, and the setting information of the breakpoint may be determined based on the second input operation of the user.

For example, the second input operation of the user may include the user performing a click operation on one node or a plurality of nodes in the flow fragment by using a right mouse button, and selecting "add a breakpoint" from a displayed tab.

It should be understood that the foregoing descriptions are merely an example, and a manner of setting the breakpoint is not limited in this embodiment of this application.

For example, if the method 200 is applied to the remote debugging scenario, the setting information of the breakpoint may be obtained by the client and sent to the server side. For example, the debugging request may further indicate the setting information of the breakpoint. Alternatively, the setting information of the breakpoint may alternatively be independently sent by the client to the server side.

Further, the method 200 may further include: obtaining related information about mock stubbing, where a location of mock stubbing is related to the flow fragment. In this case, the related information about the flow fragment may further include the related information about mock stubbing.

For example, the related information about mock stubbing may include the location of mock stubbing.

The location of mock stubbing is a node on which a mock stubbing operation is performed. There may be one or more nodes for the mock stubbing operation. This is not limited in this embodiment of this application.

For example, the location of mock stubbing may be in the flow fragment. The node for the mock stubbing operation may include any node in the flow fragment.

Alternatively, the location of mock stubbing may include a node outside the flow fragment on which the node in the flow fragment depends.

Optionally, the interaction interface in step 210 may be further used to obtain the related information about mock stubbing.

For example, the interaction interface may be used to receive a third input operation of the user. The third input operation is used to determine the related information about mock stubbing.

The user may perform an operation on the interaction interface to perform the mock stubbing operation, and information about the mock stubbing operation may be determined based on the third input operation of the user.

For example, the third input operation of the user may include the user performing a click operation on one node or a plurality of nodes in the flow fragment by using a right mouse button, and selecting "mock stubbing operation" from a displayed tab.

It should be understood that the foregoing descriptions are merely an example, and a specific implementation of the mock stubbing operation is not limited in this embodiment of this application.

The following describes an example flow fragment processing procedure when the mock stubbing operation is performed.

Optionally, processing the flow fragment may include: replacing an input of a node #1 with mock data #1, to obtain a flow fragment after replacement. In the flow fragment, the input of the node #1 depends on an output of a node #2, and the node #2 is a node for the mock stubbing operation. Correspondingly, the related information about the flow fragment that is delivered to the sandbox runtime environment indicates the mock data #1.

If the user performs the mock stubbing operation, the mock data #1 may be used to replace an output of a node for the mock stubbing operation (for example, the node #2).

The node #2 may be a node in the flow fragment. Alternatively, the node #2 may be a node outside the flow fragment.

A quantity of pieces of mock data #1 is the same as a quantity of nodes for the mock stubbing operation. The mock data #1 is in one-to-one correspondence with the nodes for the mock stubbing operation.

For example, the mock data #1 may be input by the user.

For example, if the method 200 is applied to the remote debugging scenario, the client may obtain the mock data #1 input by the user. The related information about mock stubbing may further include the mock data #1. The debugging request initiated by the client to the server side may further indicate the mock data #1.

Alternatively, the mock data #1 may be generated by the system.

For example, if the method 200 is applied to the remote debugging scenario, the mock data #1 may be generated by the server side.

It should be understood that the foregoing descriptions are merely an example, and the mock data #1 may alternatively be obtained in another manner. This is not limited in this embodiment of this application.

The foregoing processing procedure related to the mock stubbing operation may be used in combination with Example 1 to Example 3. For example, the foregoing processing procedure related to the mock stubbing operation may be used in combination with Example 3, for example, the flow fragment after replacement is converted into the second workflow. In other words, an input of a node #1 in the second workflow is the mock data #1.

For example, replacing the input of the node #1 with the mock data #1 may include: replacing the node #2 with a mock node #1, and setting the mock data #1 on the mock node #1.

To be specific, if the node for mock stubbing is located in the flow fragment, the node for the mock stubbing operation may be replaced with the mock node #1, and the mock data #1 is set on the mock node #1.

A mock node used to replace the node for the mock stubbing operation may be referred to as the mock node #1. Data used to replace an output of the mock node #1 may be referred to as the mock data #1.

A quantity of mock nodes #1 is the same as a quantity of nodes for the mock stubbing operation. The mock nodes #1 are in one-to-one correspondence with the nodes for the mock stubbing operation.

In this way, the second workflow includes the mock node #1, and does not include the node for mock stubbing.

The following describes step 230.

Optionally, performing interactive debugging on the flow fragment may include the following steps.

231: Create a runtime instance. The runtime instance corresponds to the flow fragment.

232: Perform interactive debugging based on the runtime instance.

For example, the runtime instance may be a runtime instance of the flow fragment. In this case, in step 232, interactive debugging is performed based on the runtime instance of the flow fragment.

For example, the runtime instance may be a runtime instance of the processed flow fragment. In this case, in step 232, interactive debugging is performed based on the runtime instance of the processed flow fragment.

For example, in step 220, the second workflow may be delivered to the sandbox runtime environment. Based on this, the following describes step 230 by using an example.

In step 231, a runtime instance of the second workflow may be created in the sandbox runtime environment. In step 232, interactive debugging is performed based on the runtime instance of the second workflow.

For example, step 232 may include step (1) to step (3).
(1) Obtain a debugging instruction.

For example, the debugging instruction may include any one or more of the following: an instruction for adding a breakpoint, an instruction for step-by-step running, an instruction for running to a next breakpoint, and the like.

For example, the debugging instruction may be an instruction input by the user after interactive debugging is started.

For example, if the method 200 is applied to the remote debugging scenario, the client may obtain the debugging instruction input by the user. The client sends the debugging instruction to the server side.

Alternatively, the debugging instruction may be an instruction input by the user before interactive debugging is started. For example, the debugging instruction may be setting information of a breakpoint. In step 220, the client may deliver the related information about the flow fragment to the sandbox runtime environment. The related information about the flow fragment may include the setting information of the breakpoint.

(2) Perform an operation on the runtime instance according to the input debugging instruction.

A corresponding operation is performed on the runtime instance according to the debugging instruction, for example, adding a breakpoint, running step by step, or running to a next breakpoint.

(3) Output the debugging information, where the debugging information indicates an update of a running status of the runtime instance.

When the running status of the runtime instance is updated, for example, when the runtime instance is run to a breakpoint or breakpoint data is updated, the update may be returned to the user, to notify the user of a current running status.

For example, if the method 200 is applied to the remote debugging scenario, the runtime instance may be run in the sandbox runtime environment on the server side, the debugging information is sent to the client, and the client may provide the debugging information for the user by using the user interface.

Further, the flow fragment may be removed from the sandbox runtime environment after the debugging ends.

A condition for determining that the debugging ends may be set as required.

For example, a current debugging process may end when running of the flow fragment ends.

For another example, when a debugging ending instruction input by the user is obtained, the current debugging process may end.

When the method 200 is applied to the remote debugging scenario, the client and the server side need to communicate with each other.

A real-time communication mode may be used between the client and the server side.

Optionally, the client and the server side communicate with each other by using WebSocket.

The real-time communication mode ensures status synchronization between the client and the server side, to implement real-time interactive debugging. Specifically, information such as the user instruction and the debugging request obtained by the client may be delivered to the server side in time. The debugging information on the server side may be reported to the client in time. This helps improve debugging efficiency, reduce a delay, and improve user experience.

It should be understood that the foregoing descriptions are merely an example. In another possible implementation, another real-time communication mode may alternatively be used. In addition, in some possible implementations, the real-time communication mode may not be used between the client and the server side. For example, the server side may push the debugging information to the client by using a server-send event (server-send events, SSE). For another example, the client may send the instruction to the server side by using hypertext transfer protocol secure (hypertext transfer protocol secure, HTTPs). A specific communication mode is not limited in this embodiment of this application.

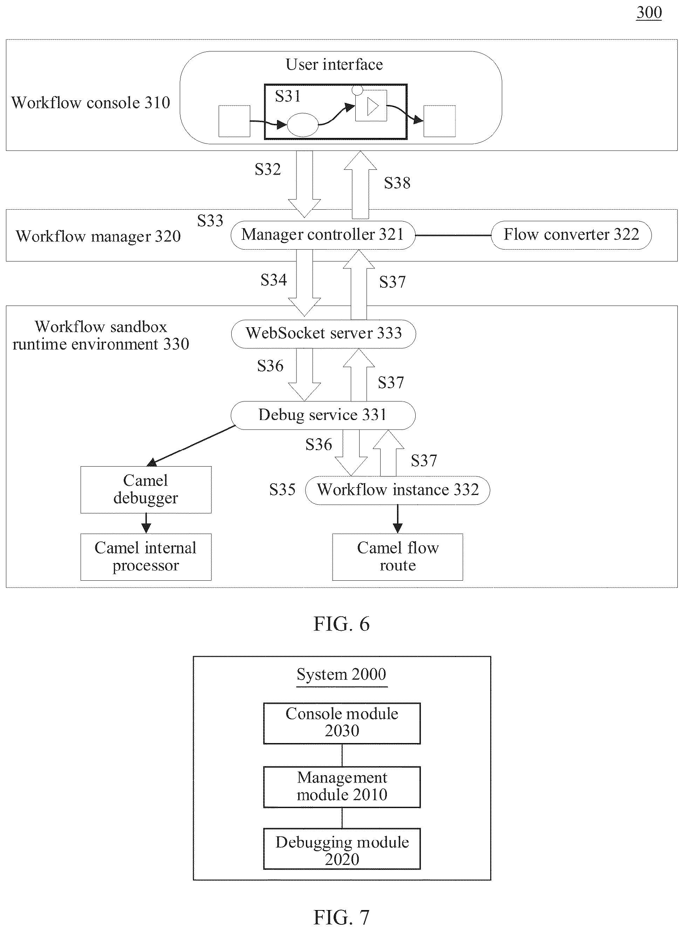

FIG. 6 is a diagram of another workflow debugging method according to an embodiment of this application. A procedure shown in FIG. 6 may be a specific implementation of the method 200. To avoid repetition, some descriptions are properly omitted when the procedure shown in FIG. 6 is described.

As shown in FIG. 6, a system 300 may include a workflow console (workflow console) 310, a workflow manager (workflow manager) 320, and a workflow sandbox runtime environment 330.

The workflow sandbox runtime environment may also be referred to as workflow sandbox runtime (workflow sandbox runtime).

In a possible implementation, the workflow console 310, the workflow manager 320, and the workflow sandbox runtime environment 330 may be three modules deployed on a same device. In this case, the workflow debugging system 300 may also be referred to as a workflow debugging apparatus 300, and the apparatus 300 may be used in a workflow local debugging scenario. In this case, communication between the workflow console 310, the workflow manager 320, and the workflow sandbox runtime environment 330 may be implemented based on an internal communication mode of the device, for example, through a bus.

In another possible implementation, the workflow console 310, the workflow manager 320, and the workflow sandbox runtime environment 330 may be deployed on different devices. The system 300 may be used in a workflow remote debugging scenario. The workflow console 310 may be deployed on a local device. Alternatively, the workflow console 310 is deployed on a client. The workflow manager 320 and the workflow sandbox runtime environment 330 may be deployed on a remote device. Alternatively, the workflow manager 320 and the workflow sandbox runtime environment 330 may be deployed on a server side. The workflow manager 320 and the workflow sandbox runtime environment 330 may be deployed on a same remote device, or may be deployed on different remote devices. For example, if the server side is in a layered architecture, the workflow manager 320 and the workflow sandbox runtime environment 330 may be deployed at different layers. A specific architecture of the server side is not limited in this embodiment of this application.

The workflow console 310 may be configured to provide a user interface, receive an input operation of a user to obtain related information, and send the related information to the workflow manager 320.

The workflow console 310 may be configured to obtain a debugging requirement that is related to a first workflow and that is input by the user, and send the debugging request to the workflow manager 320. The debugging request indicates a flow fragment. For example, the workflow console 310 may determine the flow fragment based on a first input operation of the user on an interaction interface, and send the flow fragment to the workflow manager 320.

Optionally, the workflow console 310 may be further configured to obtain start mock data and send the start mock data to the workflow manager 320. For example, the workflow console 310 may obtain the start mock data input by the user and send the debugging request to the workflow manager 320. The debugging request further indicates the start mock data.

Optionally, the workflow console 310 may be further configured to obtain setting information of a breakpoint, and send the setting information of the breakpoint to the workflow manager 320.

For example, the workflow console 310 may be further configured to obtain the setting information of the breakpoint, and send the debugging request to the workflow manager 320. The debugging request further indicates the setting information of the breakpoint.

Optionally, the workflow console 310 may be further configured to obtain related information about a mock stubbing operation, and send the related information about the mock stubbing operation to the workflow manager 320. For example, the workflow console 310 may obtain the start mock data input by the user and send the debugging request to the workflow manager 320. The debugging request further indicates the related information about the mock stubbing operation.

Further, in an interactive debugging process, the workflow console 310 may be further configured to obtain a debugging instruction input by the user, and send the debugging instruction to the workflow manager 320. For example, the setting information of the breakpoint may be sent to the workflow manager 320 as the debugging instruction.

The workflow manager 320 may be configured to process the flow fragment, and send a processed flow fragment to the sandbox runtime environment 330.

Optionally, the workflow manager 320 may be configured to perform semantic validity verification on the flow fragment.

Optionally, the workflow manager 320 may be configured to add a start mock node before a start node of the flow fragment, and set the start mock data on the start mock node. Alternatively, the workflow manager 320 may be configured to set the start mock data on a start node of the flow fragment, where the start node of the flow fragment is a start node of the first workflow.

Optionally, the workflow manager 320 may be configured to convert the flow fragment into a workflow, that is, a second workflow.

The processed flow fragment may be debugged in the sandbox runtime environment 330.

Specifically, a runtime instance of the processed flow fragment may be created in the sandbox runtime environment 330, and interactive debugging is performed on the runtime instance by using a debug service.

For example, the workflow manager 320 may send the second workflow to the sandbox runtime environment 330, and may create a runtime instance of the second workflow in the sandbox runtime environment 330, to perform interactive debugging on the runtime instance by using a debug service.

The debugging instruction of the user may be sent to the workflow manager 320 by using the workflow console 310, and then the workflow manager 320 sends the debugging instruction to the sandbox runtime environment 330. In the debug service, a corresponding operation may be performed on the runtime instance according to the debugging instruction. An update of a running status of the runtime instance may be reported to the workflow manager 320, is sent by the workflow manager 320 to the workflow console 310, and is displayed to the user by using the user interface.

For detailed descriptions of execution content of the foregoing modules/units, refer to the method 200 or a method 300. Details are not described herein.

The workflow debugging method 300 performed by the system 300 may include the following steps.

S31: The workflow console 310 obtains a debugging requirement.

Step S31 corresponds to step 210 in the method 200.

A user may perform an operation on a user interface provided by the workflow console 310, and select a fragment that needs to be debugged, that is, a flow fragment, from a workflow (that is, a first workflow) currently displayed on current user interface. For example, the user may select the flow fragment through click selection or box selection by using a mouse. The workflow console 310 may determine the flow fragment based on the operation of the user.

It should be understood that the foregoing descriptions are merely an example. For another manner of obtaining the debugging requirement, refer to related descriptions of step 210 and step 220.

Further, the user may further input start mock data as a start input of the flow fragment. The workflow console 310 may be further configured to obtain the start mock data.

It should be understood that the foregoing descriptions are merely an example. For another manner of obtaining the start mock data, refer to related descriptions of the foregoing method 200.

Further, the user may further set a breakpoint for any node on the user interface. The workflow console 310 may be further configured to obtain setting information of the breakpoint.

For detailed descriptions of the setting information of the breakpoint, refer to related descriptions of the foregoing method 200. Details are not described herein again.

Further, the user may further perform a mock stubbing operation on any node on the user interface. The workflow console 310 may be further configured to obtain related information about the mock stubbing operation.

For detailed descriptions of the related information about the mock stubbing operation, refer to related descriptions of the foregoing method 200. Details are not described herein again.

S32: The workflow console 310 sends the debugging request to the workflow manager 320. The debugging request indicates a to-be-debugged flow fragment.

For example, the debugging request may include the to-be-debugged flow fragment.

For example, after selecting a flow fragment, the user may perform a one-click/tap operation, for example, clicking/tapping a related control, to trigger the workflow console 310 to send the flow fragment to the workflow manager 320.

Further, the debugging request may further indicate the start mock data.

For example, the debugging request may further include the start mock data.

For example, after selecting the flow fragment and inputting the start mock data, the user may perform a one-click/tap operation, for example, clicking/tapping a related control, to cause the workflow console 310 to send the flow fragment and the start mock data to the workflow manager 320.

A specific communication mode in which the workflow console 310 sends the debugging request to the workflow manager 320 may be set based on a requirement.

In an example of a workflow remote debugging scenario, for example, the workflow console 310 may send the flow fragment and the start mock data to the workflow manager 320 by using WebSocket.

S33: The workflow manager 320 processes the flow fragment indicated by the debugging request, to obtain a second workflow.

After receiving the debugging request, the workflow manager 320 may process the flow fragment indicated by the debugging request.

For example, a processing process performed by the workflow manager 320 may include the following steps.

S33-1: Perform semantic validity verification on the flow fragment.

For example, step S33-1 may be performed by a manager controller (manager controller) 321 in the workflow manager 320.

For related descriptions of S33-1, refer to the foregoing example 1. Details are not described herein again.

S33-2: Add a start mock node before the flow fragment, and set the start mock data on the start mock node.

For example, step S33-2 may be performed by the manager controller 321 in the workflow manager 320.

For related descriptions of S33-2, refer to the foregoing example 2. Details are not described herein again.

S33-3: Set an input of a last node of the flow fragment as a returned result.

For example, step S33-3 may be performed by the manager controller 321 in the workflow manager 320.

S33-4: Convert the flow fragment into a workflow (that is, the second workflow).

For example, step S33-4 may be performed by a flow converter (flow converter) 322 in the workflow manager 320.

For related descriptions of S33-4, refer to the foregoing example 3. Details are not described herein again.

It should be understood that step S33-1 to step S33-4 are all optional steps. For related descriptions, refer to the method 200.

Further, if the user performs the mock stubbing operation on the user interface, step S33 may further include: replacing a node for mock stubbing with mock data. For detailed descriptions, refer to the foregoing method 200. Details are not described here again. For example, this step may be performed by the flow converter 322.

S34: The workflow manager 320 sends the second workflow to the sandbox runtime environment 330.

A specific communication mode between the workflow manager 320 and the sandbox runtime environment 330 may be set based on a requirement.

In an example of the workflow remote debugging scenario, if the workflow manager 320 and the sandbox runtime environment 330 are deployed on different remote devices, for example, the workflow manager 320 may send the second workflow to the sandbox runtime environment 330 by using WebSocket. If the workflow manager 320 and the sandbox runtime environment 330 are deployed on a same remote device, for example, the workflow manager 320 may send the second workflow to the sandbox runtime environment 330 via an internal communication means, for example, through a bus.

In the sandbox runtime environment, data and information needed for debugging may be collected.

S35: Create, in the sandbox runtime environment 330, a workflow instance (workflow instance) 332, that is, a runtime instance, of the second workflow.

As shown in the figure, in the sandbox runtime environment 330, information from the workflow manager 320 may be received by using a WebSocket server (server) 333, and information of the sandbox runtime environment 330 is returned to the workflow manager 320.

In the sandbox runtime environment 330, a debugging capability of a debug service (debug service) 331 may be used to start interactive debugging. The debug service (debug service) is used to debug a workflow. For example, the debug service 331 may implement debugging based on the following components: a camel debugger, a camel internal processor (internal processor), and a camel flow route (flow route). It should be understood that the foregoing descriptions are merely an example, and the debug service may implement debugging by using another component. A specific debugging manner of a flow is not limited in this embodiment of this application.

S36: The debug service 331 performs a corresponding operation on the workflow instance 332 based on a debugging instruction of the user, for example, adding a breakpoint, running step by step, or running to a next breakpoint.

For example, the debugging instruction of the user may be obtained by the workflow console 310, and delivered to the workflow manager 320, and then sent to the sandbox runtime environment 330 by the workflow manager 320.

S37: The workflow instance 332 reports debugging information to the workflow manager 320. The debugging information includes an update of a running status, for example, running to a breakpoint or a breakpoint data update.

A specific communication mode between the workflow manager 320 and the sandbox runtime environment 330 may be set based on a requirement.

In an example of the workflow remote debugging scenario, if the workflow manager 320 and the sandbox runtime environment 330 are deployed on different remote devices, for example, the workflow instance 332 may send the debugging information to the workflow manager 320 by using WebSocket. If the workflow manager 320 and the sandbox runtime environment 330 are deployed on a same remote device, for example, the workflow instance 332 may send the debugging information to the workflow manager 320 based on an internal communication mode of the device, for example, a bus.

S38: The workflow manager 320 sends the debugging information to the workflow console 310.

The workflow manager 320 may push the debugging information to the user interface of the workflow console 310 in real time, to feed back the debugging information to the user.

A specific communication mode between the workflow manager 320 and the sandbox runtime environment 330 may be set based on a requirement.

In an example of the workflow remote debugging scenario, the workflow manager 320 may send the debugging information to the workflow console 310 by using WebSocket.

It should be understood that the method 300 is merely an example, and does not constitute a limitation on the solution of this embodiment of this application. For example, the modules may communicate with each other in a communication mode other than WebSocket. For another implementation, refer to the method 200. Details are not described herein again.

The following describes apparatuses in embodiments of this application with reference to FIG. 7 to FIG. 10. It should be understood that the apparatuses described below can perform the methods in the foregoing embodiments of this application. To avoid unnecessary repetition, repeated descriptions are appropriately omitted in the following descriptions of the apparatuses in embodiments of this application.

FIG. 7 is a block diagram of a workflow debugging system according to an embodiment of this application. The system 2000 shown in FIG. 7 may be configured to perform the method shown in FIG. 2 or FIG. 6. The system 2000 includes a console module 2030, a management module 2010, and a debugging module 2020.

The console module is configured to obtain, from a design interface of a workflow, a debugging requirement related to a first workflow, where the debugging requirement indicates a to-be-debugged flow fragment in the first workflow, the flow fragment includes one node or a plurality of nodes in the first workflow, when the flow fragment includes the plurality of nodes, the flow fragment further includes a connection relationship among the plurality of nodes, and the connection relationship among the plurality of nodes indicates an execution sequence of the plurality of nodes.

For example, the console module 2030 may be the workflow console 310 in FIG. 6.

The management module 2010 is configured to send related information about the flow fragment to a sandbox runtime environment, where the related information about the flow fragment indicates the flow fragment and a start input of the flow fragment.

For example, the management module 2010 may be the workflow manager 320 in FIG. 6.

The console module 2030 may be further configured to receive an input debugging instruction.

The debugging module 2020 is configured to debug the flow fragment in the sandbox runtime environment according to the debugging instruction.

The console module 2030 is further configured to output debugging information, where the debugging information indicates an update of a running status in a debugging process.

For example, the sandbox runtime environment may be the workflow sandbox runtime environment 330 in FIG. 6. The debugging module 2020 may be implemented by the debug service 331 in FIG. 6.

Optionally, the management module 2010 is further configured to: convert the flow fragment into a second workflow, where the related information about the flow fragment indicates the second workflow and the start input of the flow fragment.

Optionally, the start input is a start mock input, and the management module 2010 is further configured to: add a start mock node before a start node of the flow fragment; and set start mock data on the start mock node to obtain a processed flow fragment, where the related information about the flow fragment indicates the processed flow fragment.

Optionally, the console module 2030 is further configured to: obtain the start mock data from the design interface of the workflow.

Optionally, the management module 2010 is further configured to: perform semantic validity verification on the flow fragment, and when the verification succeeds, send the related information about the flow fragment to the sandbox runtime environment.

Optionally, the debugging module 2020 is further configured to: create a runtime instance in the sandbox runtime environment, where the runtime instance corresponds to the flow fragment; and perform an operation on the runtime instance based on the input debugging instruction, where the debugging information indicates an update of a running status of the runtime instance.

Optionally, the debugging module 2020 is further configured to: remove the flow fragment from the sandbox runtime environment after the debugging ends.

For detailed descriptions, refer to the foregoing method 200. Details are not described here again.

Each module in the system 2000 may be implemented by using software or hardware. For example, the following uses the management module 2010 as an example to describe an implementation of the management module 2010. Similarly, for an implementation of another module, refer to the implementation of the management module 2010.

The module is used as an example of a software functional unit, and the management module 2010 may include code running on a computing instance. The computing instance may include at least one of a physical host (a computing device), a virtual machine, and a container. Further, there may be one or more computing instances. For example, the management module 2010 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be disposed in each VPC for communication between two VPCs in a same region or cross-region communication between VPCs in different regions. An interconnection between VPCs is implemented through the communication gateway.

The module is used as an example of a hardware functional unit, and the management module 2010 may include at least one computing device, for example, a server. Alternatively, the management module 2010 may be a device implemented by using an application-specific integrated circuit (application-specific integrated circuit, ASIC) or a programmable logic device (programmable logic device, PLD), or the like. The PLD may be implemented by a complex programmable logic device (complex programmable logical device, CPLD), a field-programmable gate array (field-programmable gate array, FPGA), generic array logic (generic array logic, GAL), or any combination thereof.

A plurality of computing devices included in the management module 2010 may be distributed in a same region, or may be distributed in different regions. The plurality of computing devices included in the management module 2010 may be distributed in a same AZ, or may be distributed in different AZs. Similarly, the plurality of computing devices included in the management module 2010 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in other embodiments, the management module 2010 may be configured to perform any step in the workflow debugging method, and other modules may be configured to perform any step in the workflow debugging method. Steps implemented by the modules may be specified as required, and the modules respectively implement different steps in the workflow debugging method to implement all functions of the system 2000.

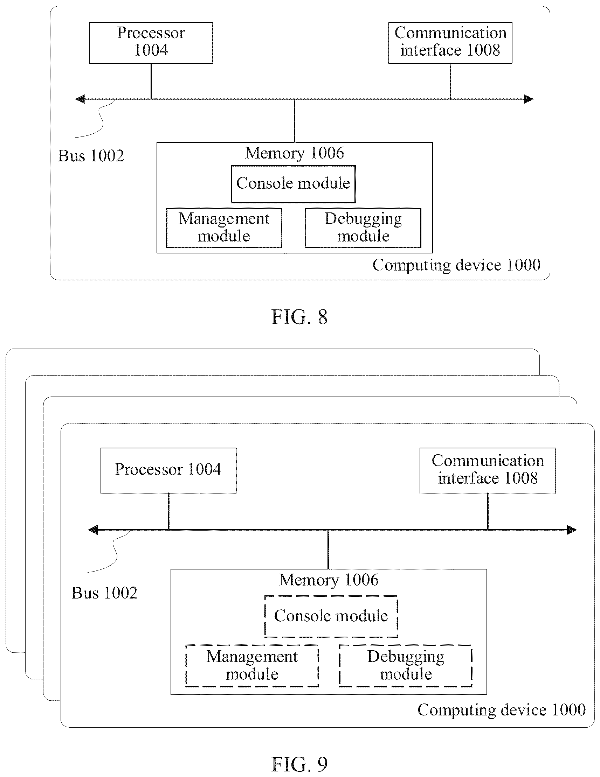

This application further provides a computing device 1000. As shown in FIG. 8, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is used for representation in FIG. 8, but this does not mean that there is only one bus or only one type of bus. The bus 1004 may include a path for transferring information between various components (for example, the memory 1006, the processor 1004, and the communication interface 1008) of the computing device 1000.

The processor 1004 may include any one or more of processors, for example, a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the foregoing modules, so as to implement the workflow debugging method. In other words, the memory 1006 stores instructions for performing the workflow debugging method.

The communication interface 1003 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 9, the computing device cluster includes at least one computing device 1000. The memory 1006 in one or more computing devices 1000 in the computing device cluster may store same instructions for performing the workflow debugging method.

In some possible implementations, the memory 1006 in the one or more computing devices 1000 in the computing device cluster may alternatively respectively store some instructions for performing the workflow debugging method. In other words, a combination of the one or more computing devices 1000 may jointly execute the instructions for performing the workflow debugging method.

It should be noted that memories 1006 in different computing devices 1000 in the computing device cluster may store different instructions for respectively performing some functions of a workflow debugging system. For example, instructions stored in the memories 1006 in different computing devices 1000 may implement functions of one or more of a console module 2030, a management module 2010, and a debugging module 2020.

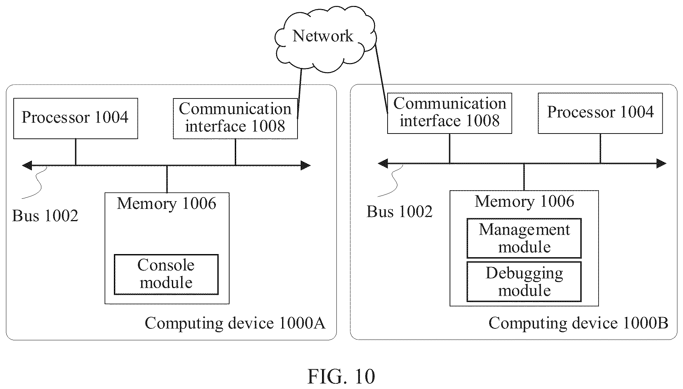

In some possible implementations, the one or more computing devices in the computing device cluster may be connected through a network. The network may be a wide area network, a local area network, or the like. FIG. 10 shows a possible implementation. As shown in FIG. 10, two computing devices 1000A and 1000B are connected to each other through a network. Specifically, each computing device is connected to the network through a communication interface of the computing device. In this possible implementation, the memory 1006 in the computing device 1000A stores instructions for performing functions of the console module 2030. In addition, the memory 1006 in the computing device 1000B stores instructions for performing functions of the management module 2010 and the debugging module 2020.

A connection manner between computing device clusters shown in FIG. 10 may be that, in consideration of a problem that data may need to be stored or a security problem occurs in the workflow debugging method provided in this application, it is considered that functions implemented by the management module 2010 and the debugging module 2020 are performed by the computing device 1000B.

It should be understood that functions of the computing device 1000A shown in FIG. 10 may alternatively be completed by a plurality of computing devices 1000. Similarly, functions of the computing device 1000B may alternatively be completed by a plurality of computing devices 1000.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform the workflow debugging method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a computing device to perform the workflow debugging method.

Finally, it should be noted that the foregoing embodiments are intended merely for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions of embodiments of this application.

## Claims

1. A workflow debugging method, applied to a cloud platform, wherein the cloud platform is configured to provide a workflow design service, and the method comprises:
Obtaining, from a design interface of a workflow, a debugging requirement related to a first workflow, wherein the debugging requirement indicates a to-be-debugged flow fragment in the first workflow, the flow fragment comprises one node or a plurality of nodes in the first workflow, when the flow fragment comprises the plurality of nodes, the flow fragment further comprises a connection relationship among the plurality of nodes, and the connection relationship among the plurality of nodes indicates an execution sequence of the plurality of nodes;
sending related information about the flow fragment to a sandbox runtime environment, wherein the related information about the flow fragment indicates the flow fragment and a start input of the flow fragment;
receiving an input debugging instruction;
debugging the flow fragment in the sandbox runtime environment according to the debugging instruction; and
outputting debugging information, wherein the debugging information indicates an update of a running status in a debugging process.

2. The method according to claim 1, wherein the method further comprises:
converting the flow fragment into a second workflow, wherein the related information about the flow fragment indicates the second workflow and the start input of the flow fragment.

3. The method according to claim 1 or 2, wherein the start input of the flow fragment is start mock data, and the method further comprises:
adding a start mock node before a start node of the flow fragment; and
setting the start mock data on the start mock node to obtain a processed flow fragment, wherein the related information about the flow fragment indicates the processed flow fragment.

4. The method according to claim 3, wherein the method further comprises:
obtaining the start mock data from the design interface of the workflow.

5. The method according to any one of claims 1 to 4, wherein the method further comprises:
performing semantic validity verification on the flow fragment, and when the verification succeeds, sending the related information about the flow fragment to the sandbox runtime environment.

6. The method according to any one of claims 1 to 5, wherein the debugging the flow fragment in the sandbox runtime environment according to the debugging instruction comprises:
creating a runtime instance in the sandbox runtime environment, wherein the runtime instance corresponds to the flow fragment; and
performing an operation on the runtime instance according to the debugging instruction, wherein the debugging information indicates an update of a running status of the runtime instance.

7. The method according to any one of claims 1 to 6, wherein the method further comprises:
removing the flow fragment from the sandbox runtime environment after the debugging ends.

8. A workflow debugging system, comprising:
a console module, configured to obtain, from a design interface of a workflow, a debugging requirement related to a first workflow, wherein the debugging requirement indicates a to-be-debugged flow fragment in the first workflow, the flow fragment comprises one node or a plurality of nodes in the first workflow, when the flow fragment comprises the plurality of nodes, the flow fragment further comprises a connection relationship among the plurality of nodes, and the connection relationship among the plurality of nodes indicates an execution sequence of the plurality of nodes;
a management module, configured to send related information about the flow fragment to a sandbox runtime environment, wherein the related information about the flow fragment indicates the flow fragment and a start input of the flow fragment, wherein
the console module is further configured to receive an input debugging instruction; and
a debugging module, configured to debug the flow fragment in the sandbox runtime environment according to the debugging instruction, wherein
the console module is further configured to output debugging information, wherein the debugging information indicates an update of a running status in a debugging process.

9. The system according to claim 8, wherein the management module is further configured to:
convert the flow fragment into a second workflow, wherein the related information about the flow fragment indicates the second workflow and the start input of the flow fragment.

10. The system according to claim 8 or 9, wherein the start input of the flow fragment is start mock data, and
the management module is further configured to:
add a start mock node before a start node of the flow fragment; and
set the start mock data on the start mock node to obtain a processed flow fragment, wherein the related information about the flow fragment indicates the processed flow fragment.

11. The system according to claim 10, wherein the console module is further configured to:
obtain the start mock data from the design interface of the workflow.

12. The system according to any one of claims 8 to 11, wherein the management module is further configured to:
perform semantic validity verification on the flow fragment, and when the verification succeeds, send the related information about the flow fragment to the sandbox runtime environment.

13. The system according to any one of claims 8 to 12, wherein the debugging module is specifically configured to:
create a runtime instance in the sandbox runtime environment, wherein the runtime instance corresponds to the flow fragment; and
perform an operation on the runtime instance according to the debugging instruction, wherein the debugging information indicates an update of a running status of the runtime instance.

14. The system according to any one of claims 8 to 13, wherein the debugging module is further configured to:
removing the flow fragment from the sandbox runtime environment after the debugging ends.

15. A computing device cluster, comprising at least one computing device, wherein each computing device comprises a processor and a memory, and
the processor of the at least one computing device is configured to execute instructions stored in the memory of the at least one computing device, to cause the computing device cluster to perform the method according to any one of claims 1 to 7.

16. A computer-readable storage medium, comprising computer program instructions, wherein when the computer program instructions are executed by a computing device cluster, the computing device cluster performs the method according to any one of claims 1 to 7.

17. A computer program product comprising instructions, wherein when the instructions are run by a computing device cluster, the computing device cluster is caused to perform the method according to any one of claims 1 to 7.
